# EUROPÄISCHE PATENTSCHRIFT

(11) **EP 1 936 726 B1**
(45) Veröffentlichungstag und Bekanntmachung des Hinweises auf die Patenterteilung: **29.02.2012**
(21) Anmeldenummer: 07017265.5
(22) Anmeldetag: 04.09.2007
(51) Int. Cl.: H01M 8/04

(54) **Brennstoffzellenanordnung und Verfahren zum Betreiben einer Brennstoffzelle**
Fuel cell assembly and method for operating a fuel cell
Agencement de cellules de combustible et procédé de fonctionnement d'une cellule de combustible

(30) Priorität: 19.12.2006 DE 102006060454
(43) Veröffentlichungstag der Anmeldung: 25.06.2008
(73) Patentinhaber: HyPower Invest GmbH, 45699 Herten (DE)
(72) Erfinder: Müller, Wilfried, 46147 Oberhausen (DE)
(74) Vertreter: Gesthuysen, von Rohr & Eggert

(56) Entgegenhaltungen:
- EP-A- 1 329 971
- WO-A-02/27833
- WO-A-03/015202
- WO-A-2005/036688
- US-A- 3 664 873
- US-A1- 2002 034 669

## Beschreibung

Die vorliegende Erfindung betrifft eine Brennstoffzellenanordnung gemäß dem Oberbegriff des Anspruchs 1.

Die US 2002/034669 A1 offenbart eine Brennstoffzellenanordnung mit einer Versorgungseinrichtung zur Versorgung einer Brennstoffzelle mit Wasserstoff, wobei die Versorgungseinrichtung einen Druckminderer aufweist, um den Druck eines aus der Versorgungseinrichtung entnommenen Wasserstoffstroms abzusenken und Wasserstoff auf einem gegenüber dem Versorgungsdruck verringerten Zuführdruck der Brennstoffzelle zuzuführen. Zwischen dem Druckminderer und der Brennstoffzelle ist ein Ejektor vorgesehen, der der Brennstoffzelle einen Wasserstoffstrom zuführt und am Gasaustritt der Brennstoffzelle unverbrauchten Wasserstoff zur Rezirkulation absaugt.

Aus der EP 1 329 971 A ist eine Brennstoffzelle mit einem Innenraum bekannt, in dem ein Gasspeicher angeordnet ist. Der Gasspeicher versorgt eine zischen einem Rohrkörper der Brennstoffzelle und einer zentralen Protonenaustauschermembran angeordnete Diffusorschicht mit einem Reaktionsgas. Der zylindrische Innenraum ist bis auf mindesten eine Gasdurchtrittspassage zu der Diffusorschicht gasdicht geschlossen, wobei er an einem Ende des Rohrkörpers durch eine elastisch verformbare Membran begrenzt ist. Der Membran ist ein Betätigungselement zugeordnet, das auf ein Ventilelement eines Auslaßventils des Gasspeichers einwirkt, das Reaktionsgas in den Innenraum ausläßt. Ein Öffnen und ein Schließen des Auslaßventils kann jeweils bei einem Unterdruck in dem Innenraum gegenüber der Umgebung erfolgen.

Die US 3 664 873 A betrifft eine gekapselte Brennstoffzellenanordnung, wobei ein Wasserstoffstrom von außen einer Brennstoffzelle zugeführt wird und wobei die Brennstoffzelle zur Kapselung in einem Gehäuse angeordnet ist. Der Druck der Atmosphäre im Inneren des Gehäuses liegt oberhalb des Umgebungsdrucks.

Die WO 02/27833 A offenbart eine Brennstoffzellenanlage mit einem Brennstoffzellenmodul, das in einen gasdichten Druckbehälter eingeschlossen ist.

Durch die Befüllung des Druckbehälters mit einem Schutzgas dringt bei einem Leck des Brennstoffzellenmoduls kein Betriebsgas aus dem Modul aus, sondern Schutzgas in das Modul ein. Hierdurch kann keine Gefahr mehr von dem Leck ausgehen und es kann zusätzlich durch einen Spannungsabfall der vom Leck betroffenen Zellen erkannt und lokalisiert werden.

Die WO 03/015202 A betrifft schließlich ein Brennstoffzellen-System mit einer Reaktionsgas-Druckregelung oder Reäktionsgas-Volumenstromregelung sowie eine Betriebsmittelversorgung und -entsorgung unter Nutzung eines Reaktionsgas-Volumenstroms. Für die Druckregelung weist das Brennstoffzellensystem eine Reaktionsgas-Zuführung mit einem Hochdruckbereich und einem Niederdruckbereich zu einem Brennstoffzellen-Stapel auf. Der Druck in dem Hochdruckbereich kann bis 5 bar und 200 bar betragen. Der Druck im Niederdruckbereich liegt typischerweise im Bereich von wenigen 100 mbar bis zu wenigen bar.

Aus der WO 2005/036688 A ist ein Brennstoffzellensystem als Energie- bzw. Stromquelle für elektrische Antriebe im untertägigen Bergbau bekannt, das modular ausgebildet ist, wobei das Brennstoffzellensystem in einem Containment angeordnet ist und wobei das Containment eine Überdruckkapselung aufweist. Der Druck im Containment ist größer als der atmosphärische Druck außerhalb des Containments. Aufgrund des Druckgefälles ist es unmöglich, daß explosionsfähige Umgebungsgase in das Containment strömen.

Brennstoffzellen zeichnen sich durch einen hohen elektrischen Wirkungsgrad, niedrige Schadstoffemissionen sowie geringe Geräuschentwicklung aus und sind insbesondere zum Antrieb von Fahrzeugen bzw. zur mobilen Erzeugung elektrischer Energie sehr gut geeignet.

Bei Brennstoffzellen wird vorzugsweise Wasserstoff als Brenngas eingesetzt. Der Wasserstoff wird gerade bei Fahrzeugen üblicherweise in Speichern mit einem hohen Speicherdruck mitgeführt. Der Speicherdruck wird normalerweise mittels eines Druckminderers auf einen Absolutwert, üblicherweise etwa 120 kPa, gemindert.

Heutige Fahrzeugkonzepte mit Brennstoffzellen sehen sehr umfangreiche und entsprechend teure Sicherungseinrichtungen mit einer Vielzahl von Sensoren und dergleichen vor, um bei einem Unfall, bei einer Leckage oder dergleichen ein unerwünschtes Austreten von Wasserstoff und die damit einhergehende Explosionsgefahr vermeiden zu können.

Da besonders bevorzugt Wasserstoff als Brenngas eingesetzt wird, wird nachfolgend immer nur auf Wasserstoff als Brenngas Bezug genommen, auch wenn die vorliegende Erfindung hierauf nicht beschränkt ist, sondern grundsätzlich auch bei jeder sonstigen Art von Brenngas einsetzbar ist.

Der vorliegenden Erfindung liegt die Aufgabe zugrunde, eine Brennstoffzellenanordnung anzugeben, wobei auf einfache und kostengünstige Weise ein sicherer Betrieb ermöglicht wird.

Die obige Aufgabe wird durch eine Brennstoffzellenanordnung gemäß Anspruch 1 gelöst. Vorteilhafte Weiterbildungen sind Gegenstand der Unteransprüche.

Ein erster Aspekt der vorliegenden Erfindung liegt darin, Wasserstoff der Brennstoffzelle mit einem Zuführdruck unter dem Umgebungsdruck (Atmosphärendruck) zuzuführen. Insbesondere wird hierzu der Zuführdruck um eine vorzugsweise vorgebbare Druckdifferenz unter den Umgebungsdruck gemindert, wobei die Brennstoffzellenanordnung eine Pumpe zum brenngasseitigen Absaugen von Gas aus der mindestens einen Brennstoffzelle aufweist und wobei ein dieser Pumpe zugeordnetes Sperrventil stromauf der Pumpe angeordnet ist.

Die vorschlagsgemäße Lösung nutzt aus, daß eine Brennstoffzellenanordnung gasdicht ist. Folglich ist ein gegenüber dem Umgebungsdruck höherer Zuführdruck, wie beim Stand der Technik bisher vorgesehen, nicht erforderlich. Vielmehr strömt der Wasserstoff auch mit einem gegenüber dem Umgebungsdruck niedrigeren Zuführdruck in die Brennstoffzelle. Dort wird der Wasserstoff zerlegt und oxidiert und aus der Gasphase über eine gasdichte Membran oder dergleichen aus dem Brenngasraum entfernt.

Die vorschlagsgemäße Lösung verhindert auf verblüffend einfache Weise, daß Wasserstoff bei einer Leckage der Brennstoffzelle bzw. der Brennstoffzellenanordnung in unerwünschter Weise austreten kann. Aufgrund des niedrigeren Drucks führt eine Leckage nämlich dazu, daß lediglich Umgebungsluft in die Brennstoffzelle eindringen kann. Dies ist jedoch mit weniger Risiken behaftet, als ein unkontrollierter Austritt von Wasserstoff an die Umgebung. Weiter steigt dann der Druck in der Brennstoffzelle auf den Umgebungsdruck, so daß zwangsläufig kein weiterer Wasserstoff mit seinem niedrigen Zuführdruck in die undichte Brennstoffzelle nachströmt.

Ein zweiter, gegebenenfalls auch unabhängig realisierbarer Aspekt der vorliegenden Erfindung liegt darin, ein Feuerschutzgehäuse zur Aufnahme der Brennstoffzelle, insbesondere mehrerer Brennstoffzellen bzw. eines üblichen Stacks von Brennstoffzellen, vorzusehen. Das Feuerschutzgehäuse ist vorzugsweise derart ausgebildet, daß es der möglichen Brandlast für eine vorbestimmte Zeit, insbesondere mehrere Stunden, standhalten kann. Der besondere Vorteil bzw. bei Kombination mit der Verringerung des Umgebungsdrucks liegt darin, daß bei einer Leckage und einem damit einhergehenden Eindringen von Umgebungsluft in die Brennstoffzelle(n) der Druck entsprechend ansteigt, so daß kein weiterer Wasserstoff in seinem gegenüber dem Umgebungsdruck verringerten Zuführdruck weiter in die Brennstoffzelle(n) strömen kann. Dementsprechend ist die maximale Brandlast bekannt, und das Feuerschutzgehäuse kann entsprechend ausgelegt werden.

Weitere Vorteile, Merkmale, Eigenschaften und Aspekte der vorliegenden Erfindung ergeben sich aus den Ansprüchen und der folgenden Beschreibung bevorzugter Ausführungsformen anhand der Zeichnung. Es zeigt:
- Fig. 1: eine blockschaltbildartige, schematische Darstellung einer vor- schlagsgemäßen Brennstoffzellenanordnung gemäß einer ersten Ausführungsform;
- Fig. 2: eine blockschaltbildartige, schematische Darstellung einer vor- schlagsgemäßen Brennstoffzellenanordnung gemäß einer zweiten Ausführungsform; und
- Fig. 3: eine blockschaltbildartige, schematische Darstellung eines Teils einer vorschlagsgemäßen Brennstoffzellenanordnung gemäß ei- ner dritten Ausführungsform.

Für gleiche oder ähnliche Bauteile und Komponenten werden bei den verschiedenen Ausführungsformen die gleichen Bezugszeichen verwendet, wobei sich insbesondere gleiche oder entsprechende Eigenschaften bzw. Vorteile ergeben, auch wenn eine wiederholte Beschreibung weggelassen ist.

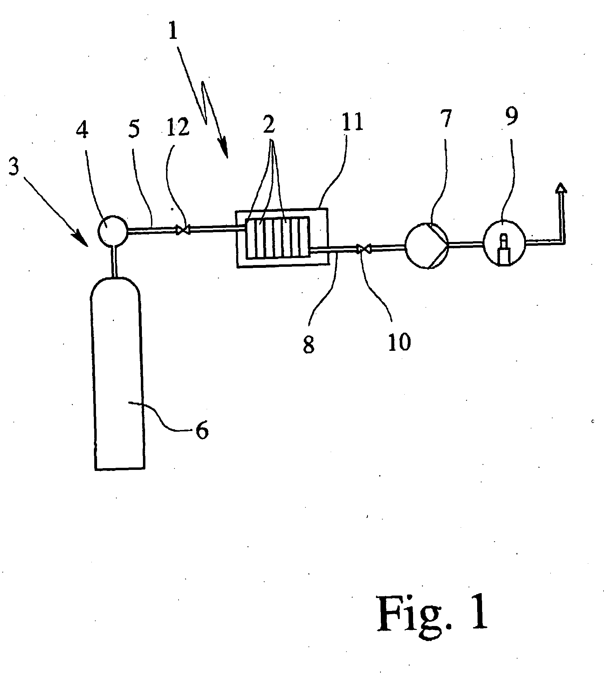

Fig. 1 zeigt schematisch eine erste Ausführungsform einer vorschlagsgemäßen Brennstoffzellenanordnung 1 mit mindestens einer Brennstoffzelle 2, vorzugsweise mehreren Brennstoffzellen 2, die insbesondere einen sogenannten Stack bzw. Stapel bilden, also insbesondere hintereinander angeordnet sind. Nachfolgend wird immer nur auf eine einzige Brennstoffzelle 2 Bezug genommen, auch wenn bevorzugt mehrere Brennstoffzellen 2 vorgesehen sind.

Die Brennstoffzelle 2 weist vorzugsweise - wie üblich - eine mit einem Katalysator versehene Anode auf, um den Wasserstoff zu zerlegen und zu Protonen zu oxidieren, die durch eine Membran zu einer Kathode gelangen und dort mit zugeführtem Sauerstoff reagieren und Wasser bilden. Der Sauerstoff wird durch ein entsprechendes Oxidationsgas, wie Luft, oder sonstige geeignete Weise bereitgestellt. Die Zuführung des Oxidationsgases und die Ableitung des entstehenden Wassers sind ebenso wenig wie die Anode, die Membran und die Kathode dargestellt. Der grundsätzliche Aufbau und mögliche Varianten einer Brennstoffzelle sind bekannt, so daß diesbezüglich auf den Stand der Technik verwiesen werden darf.

Die Brennstoffzellenanordnung 1 weist weiter eine Versorgungseinrichtung 3 zur Versorgung der Brennstoffzelle 2 mit Brenngas, insbesondere Wasserstoff, auf.

Die Brennstoffzellenanordnung 1 bzw. Versorgungseinrichtung 3 ist derart ausgebildet, daß der Zuführdruck, mit dem der Wasserstoff der Brennstoffzelle 2 zugeführt wird, unter dem Umgebungsdruck (Atmosphärendruck) liegt. Die Versorgungseinrichtung 3 weist hierzu einen Druckminderer 4 auf, um einen gegenüber dem Zuführdruck erhöhten Versorgungsdruck des Wasserstoffs auf den Zuführdruck abzusenken und den Wasserstoff mit diesem verringerten Zuführdruck über eine Zuleitung 5 der Brennstoffzelle 2 zuführen zu können.

Der Druckminderer 4 ist insbesondere als Relativregler und/oder derart ausgebildet, daß der Zuführdruck um eine vorzugsweise vorgebbare Druckdifferenz unter dem Umgebungsdruck liegt. Die Druckdifferenz beträgt vorzugsweise etwa 100 bis 5.000 Pa.

Vorzugsweise wird der Zuführdruck also auf einen relativen - insbesondere vom Umgebungsdruck abhängigen - Druckwert gesteuert oder geregelt. Ggf. kann der Zuführdruck auch zur Steuerung der Brennstoffzelle 2 variiert werden. Alternativ kann der Zuführdruck auf einen absoluten Druckwert gesteuert oder geregelt werden.

Als Druckminderer 4 sind insbesondere sogenannte Atemluftregler für Taucher bzw. von der Funktion her entsprechende Geräte einsetzbar, die sehr zuverlässig arbeiten und eine Absenkung des Gasdrucks beispielsweise auf 500 Pa unter dem Umgebungsdruck auch bei sehr großen Schwankungen des Umgebungsdrucks sicherstellen.

Jedoch sind auch sonstige Lösungen möglich. Insbesondere ist es auch möglich, einen Absolutregler einzusetzen bzw. den Zuführdruck des Wasserstoffs auf einen absoluten Druck unter dem Normaldruck abzusenken, insbesondere wenn dieser absolute Druck ausreichend niedrig ist, daß er auch bei den üblichen Schwankungen des Umgebungsdrucks vorzugsweise immer unterhalb des Umgebungsdrucks liegt.

Beim Darstellungsbeispiel weist die Versorgungseinrichtung 3 vorzugsweise einen Druckspeicher 6 zur Bereitstellung des Wasserstoffs auf. Der Speicherdruck ist üblicherweise relativ hoch. Dieser Speicherdruck stellt einen Versorgungsdruck dar, der von dem Druckminderer 4 auf den gewünschten Zuführdruck erniedrigt wird.

Jedoch ist es beispielsweise auch möglich, den Wasserstoff durch einen nicht dargestellten Reformer oder eine sonstige Einrichtung bereitzustellen und/ oder zwischenzuspeichern. Dies erfolgt meistens mit einem gegenüber dem Zuführdruck erhöhten Versorgungsdruck. Auch in diesem Fall sorgt der Druckminderer 4 entsprechend für die gewünschte Erniedrigung des Versorgungsdrucks auf den vorschlagsgemäßen Zuführdruck.

Die vorschlagsgemäße Brennstoffzellenanordnung 1 weist vorzugsweise eine Pumpe 7 zum brenngasseitigen Absaugen von Gas aus der Brennstoffzelle 2 auf. Die Pumpe 7 ist insbesondere über eine entsprechende Ableitung 8 an die Brennstoffzelle 2 angeschlossen. Zum Starten der Brennstoffzelle 2, insbesondere wenn diese anfangs noch mit Umgebungsluft gefüllt ist, und/oder zum generellen Spülen der Brennstoffzelle 2, ist die Pumpe 7 vorgesehen, da ein Absaugen des Gases aufgrund des geringen Zuführdrucks des Wasserstoffs erforderlich ist.

Der Pumpe 7 ist vorzugsweise eine Zündeinrichtung 9 zugeordnet bzw. nachgeordnet, um abgesaugtes Gas direkt verbrennen zu können. Die Zündeinrichtung 9 wird beispielsweise elektrisch betrieben bzw. beheizt. Besonders bevorzugt ist die Pumpe 7 nur dann in Betrieb setzbar, wenn die Zündeinrichtung 9 ihre Zünd- bzw. Betriebstemperatur erreicht hat. Dies ist beispielsweise durch eine entsprechende Messung oder Überwachung des Heizstroms oder dergleichen feststellbar.

Weiter ist der Brennstoffzellenanordnung 1 bzw. der Pumpe 7 vorzugsweise ein Sperrventil 10 zugeordnet, das insbesondere nur bei laufender Pumpe 7 öffenbar ist. Das Sperrventil 10 ist vorzugsweise stromauf der Pumpe 7 angeordnet. Besonders bevorzugt öffnet das Sperrventil 10 selbstätig und/oder nur bei pumpseitigem Unterdruck.

Das Sperrventil 10 ist vorzugsweise als Einwegventil bzw. Rückschlagventil ausgebildet, um ein Eindringen von Umgebungsluft über die Ableitung 8 in die Brennstoffzelle 2 mit Sicherheit ausschließen zu können.

Gemäß einem weiteren, gegebenenfalls auch unabhängig realisierbaren Aspekt weist die Brennstoffzellenanordnung 1 vorzugsweise ein Feuerschutzgehäuse 11 auf, in dem die Brennstoffzelle 2 bzw. die Brennstoffzellen 2 angeordnet ist bzw. sind. Das Feuerschutzgehäuse 11 ist vorzugsweise druckfest, gasdicht und/oder derart ausgelegt, daß es für eine vorbestimmte Zeit, insbesondere mehrere Stunden, der darin befindlichen Brandlast standhalten kann.

Die Brandlast besteht insbesondere aus den Brennstoffzellen 2 bzw. den zu deren Herstellung verwendeten Materialien und aus dem maximalen Volumen an Wasserstoff, der sich darin befinden kann. Dementsprechend ist die Brandlast genau bestimmbar und kann das Feuerschutzgehäuse 11 wunschgemäß ausgelegt werden.

Aufgrund des vorzugsweise gegenüber dem Umgebungsdruck abgesenkten Zuführdrucks des Wasserstoffs kann im Falle eines Lecks bzw. einer Undichtigkeit ein unerwünschtes Austreten von Wasserstoff ausgeschlossen werden. Allenfalls kann Umgebungsluft oder sonstiges Gas eindringen, wodurch sich der Druck in der Brennstoffzelle 2 erhöht und dementsprechend eine weitere Zufuhr von Wasserstoff mit dem geringeren Zuführdruck nicht mehr erfolgt. Dementsprechend erfolgt kein unerwünschtes Nachströmen von Wasserstoff mehr in die undichte Brennstoffzelle 2.

Das Gehäuse 11 braucht zum Feuerschutz nicht unbedingt gasdicht ausgebildet sein, auch wenn dies wünschenswert ist. Alternativ oder zusätzlich zum Feuerschutz kann das Gehäuse 11 auch gasdicht ausgebildet sein und beispielsweise aus Sicherheitsgründen unter Unterdruck gesetzt werden, ggf. sogar auf den Zuführdruck.

Die Brennstoffzellenanordnung 1 bzw. Versorgungseinrichtung 3 kann bedarfsweise ein Sicherheitsventil 12 zum Sperren der Brenngaszufuhr, insbesondere der Zuleitung 5, und/oder Ablassen des Wasserstoffs aufweisen. Das Sicherheitsventil 12 kann manuell oder in sonstiger Weise betätigbar sein.

Nachfolgend werden weitere Ausführungsformen erläutert, wobei die bisherigen Ausführungen und Erläuterungen zur ersten Ausführungsform insbesondere ergänzend bzw. entsprechend gelten.

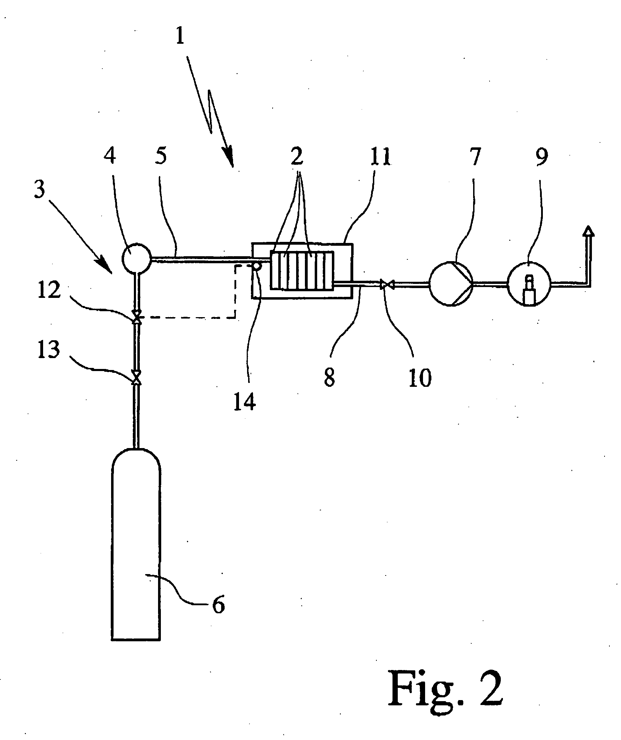

Fig. 2 zeigt eine zweite Ausführungsform der vorschlagsgemäßen Brennstoffzellenanordnung 1. Das Sicherheitsventil 12 ist hier vorzugsweise stromauf des Druckminderers 4 angeordnet, insbesondere also versorgungsseitig.

Optional ist ein vorzugsweise manuell betätigbares Absperrventil 13 der Versorgungseinrichtung 3 bzw. dem Druckspeicher 6. Das Absperrventil 13 gestattet ein Sperren der Versorgung mit Brenngas. Beim Darstellungsbeispiel ist das Sicherheitsventil 12 stromab des Absperrventils 13 angeordnet.

Bei der zweiten Ausführungsform ist das Gehäuse 11 der Brennstoffzelle 2 bzw. des Brennstoffzellenstapels vorzugsweise gasdicht ausgebildet.

Gemäß einer Ausführungsvariante, die bedarfsweise auch unabhängig von der Zuführung des Brenngases unter Umgebungsdruck realisierbar ist, kann der Gasdruck in dem Gehäuse 11 überwacht bzw. gemessen werden, insbesondere mittels eines Drucksensors oder Druckschalters 14, wie in Fig. 2 angedeutet. Wenn der Druck in dem Gehäuse 11 einen bestimmten Schwellenwert überschreitet, kann beispielsweise das Sicherheitsventil 12 automatisch geschlossen werden, insbesondere elektrisch, hydraulisch, pneumatisch oder mechanisch, wie durch die gestrichelte Linie in Fig. 2 angedeutet.

Bei der Zuführung des Brenngases mit einem Zuführdruck unter dem Umgebungsdruck kann bedarfsweise der Druck in dem Gehäuse 11 ebenfalls abgesenkt werden, beispielsweise mittels der Pumpe 7 oder einer sonstigen, nicht gezeigten Einrichtung. Wenn dann der Druck in dem Gehäuse 11 einen Schwellwert erreicht oder übersteigt, beispielsweise aufgrund einer Undichtigkeit des Gehäuses 11 durch Eindringen von Luft von außen oder durch Entweichen von Brenngas oder Oxidationsgas aus der Brennstoffzelle 2, erfolgt vorzugsweise unmittelbar eine Abschaltung der Brenngaszuführung, insbesondere durch Schließen des Sicherheitsventils 12 oder durch Einleiten sonstiger geeigneter Maßnahmen.

Alternativ oder zusätzlich erfolgt vorzugsweise eine Überwachung des Zuführdrucks. In diesem Fall ist der Drucksensor bzw. der Druckschalter 14 oder ein zweiter Drucksensor bzw. Druckschalter oder dgl. mit der Brenngaszuführung, insbesondere der Zuleitung 5, gekoppelt.

Bei Erreichen oder Überschreiten eines Schwellwerts (es kann sich hier um einen absoluten oder um einen relativen, also vom Umgebungsdruck abhängigen Schwellwert handeln) wird dann die Brenngaszuführung vorzugsweise unterbrochen, insbesondere wiederum durch Schließen des Sicherheitsventils 12 oder Einleiten sonstiger geeigneter Maßnahmen.

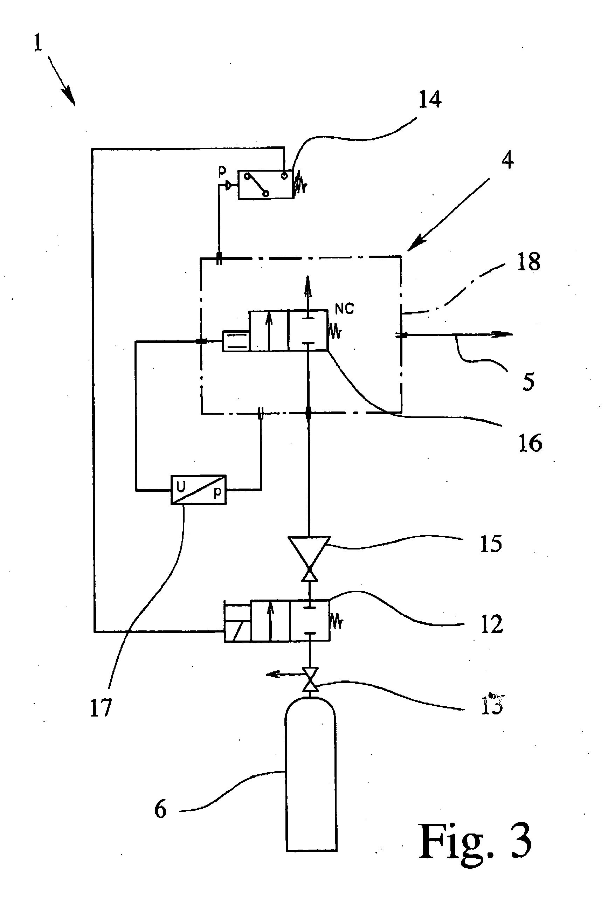

Fig. 3 zeigt eine dritte Ausführungsform der vorschlagsgemäßen Brennstoffzellenanordnung 1. Hier ist dem Druckminderer 4 optional ein vorzugsweise mechanischer Vordruckregler 15 zur ersten Reduzierung des Versorgungsdrucks des Brenngases auf einen verminderten Druck, ggf. sogar bereits auf den Zuführdruck, vorgeschaltet. Beim Darstellungsbeispiel reduziert der Vordruckregler 15 den Brenngasdruck beispielsweise auf etwa 300 kPa.

Der nachgeschaltete Druckminderer 4 dient dann einer weiteren Absenkung des Brenngasdrucks auf den Zuführdruck, einer Regelung und/oder Steuerung des Zuführdrucks und/oder als Sicherung, falls der Vordruckregler 15 ausfällt.

Das Sicherheitsventil 12 ist vorzugsweise stromauf des Vordruckreglers 15 angeordnet, kann aber auch stromab des Vordruckreglers 15 angeordnet sein.

Bei der dritten Ausführungsform weist der Druckminderer 4 vorzugsweise ein Ventil 16 zur Druckminderung auf. Das Ventil 16 ist vorzugsweise elektrisch steuerbar bzw. betätigbar, insbesondere als elektromagnetisches oder piezoelektrisches Ventil ausgebildet. Das Ventil 16 kann jedoch auch mechanisch, hydraulisch, pneumatisch oder auf sonstige Weise steuerbar bzw. betätigbar sein.

Insbesondere handelt es sich bei dem Ventil 16 um ein Drossel- und/oder Sperrventil, das zur Steuerung bzw. Regelung oder Minderung bzw. Drosselung des Brenngasdrucks auf den Zuführdruck entsprechend geöffnet und geschlossen bzw. gedrosselt wird. Besonders bevorzugt handelt es sich beim dem Ventil 16 um ein Proportional-Ventil.

Das Ventil 16 ist vorzugsweise mittels einer entsprechenden Einrichtung und/oder einem Drucksensor 17 derart steuerbar oder regelbar, daß die Brenngaszuführung mit dem gewünschten Zuführdruck - wie bereits erläutert - erfolgt bzw. der Brenngasdruck auf den Zuführdruck reduziert wird.

Zur Erfassung bzw. Messung des Zuführdrucks ist der Drucksensor 17 mit der Brenngaszuführung gekoppelt, beispielsweise mit der Zuleitung 5.

Beim Darstellungsbeispiel ist das Ventil 16 vorzugsweise in einem Schutzgehäuse 16 angeordnet. Das Schutzgehäuse 18 ist insbesondere das- und/oder druckdicht ausgebildet. Insbesondere herrscht im Schutzgehäuse 18 der Zuführdruck. Beim Darstellungsbeispiel öffnet sich der Ausgang des Ventils 16 direkt in den Innenraum des Schutzgehäuses 18. Dementsprechend kann dann der Drucksensor 17 beispielsweise direkt den Gasdruck im Schutzgehäuse 18 als Meßgröße bzw. Regelgröße erfassen.

Alternativ kann sich auch unmittelbar an den Ausgang des Ventils 16 die Zuleitung 5 zu der Brennstoffzelle 2 anschließen.

In Abhängigkeit von dem in der Brenngaszuführung bzw. in dem Schutzgehäuse 18 herrschenden Gasdruck erfolgt dann die Steuerung bzw. Regelung des Ventils 16.

Das Ventil 16 ist vorzugsweise über eine mechanische bzw. metallische Verbindung direkt bzw. sicher an den Vordruckregler 15 bzw. das Sicherheitsventil 12 angeschlossen.

Bei der dritten Ausführungsform erfolgt vorzugsweise auch eine Überwachung des Gasdrucks im Schutzgehäuse 18. Wenn der Gasdruck ansteigt, insbesondere einen Schwellwert erreicht oder übersteigt, wird die Brenngaszuführung vorzugsweise unmittelbar gesperrt.

Grundsätzlich kann die Überwachung des Gasdrucks im Schutzgehäuse 18 auch mittels des Drucksensors 17, der die entsprechenden Meßwerte zur Steuerung bzw. Regelung des Ventils 16 liefert, erfolgen. Vorzugsweise erfolgt die Überwachung des Gasdrucks im Schutzgasgehäuse 18 - also des Zuführdrucks - unabhängig über eine separate Einrichtung, besonders bevorzugt den dargestellten Druckschalter 14, der den Druck im Schutzgehäuse 18 überwacht. Wenn der Gasdruck bzw. Zuführdruck einen Schwellenwert erreicht oder überschreitet, wird das Sicherheitsventil 12 geschlossen und damit die Brenngaszuführung gesperrt. So kann beispielsweise bei einem Versagen der Steuerung des Druckminderers 4 bzw. Versagen oder Ausfall des Ventils 16 direkt eingegriffen und ein unerwünschtes Ansteigen des Zuführdrucks bzw. Nachströmen von Brenngas vermieden werden.

Bei dem Schwellwert kann es sich um einen relativen, also vom Umgebungsdruck abhängigen Schwellwert handeln. Beispielsweise liegt der Schwellwert unter dem Umgebungsdruck, selbstverständlich aber über den gewünschten Zuführdruck. Der Schwellwert kann jedoch auch einfach unmittelbar ein Umgebungsdruck oder ein etwas darüberliegender Druck sein.

Alternativ kann es sich bei dem Schwellwert auch um einen absoluten Druckwert, beispielsweise den Normaldruck, handeln.

Das Sicherheitsventil 12 kann - wie bereits erwähnt - ebenfalls wahlweise elektrisch, mechanisch, hydraulisch, pneumatisch oder auf sonstige geeignete Weise steuerbar bzw. betätigbar sein.

Das Schutzgehäuse 18 ist vorzugsweise getrennt von dem die Brennstoffzelle(n) 2 umgebenden Gehäuse 11 (in Fig. 3 nicht dargestellt) ausgebildet. Die Zuleitung 5 verbindet dann den Ausgang des Ventils 16 bzw. den Innenraum des Schutzgehäuses 18 mit der Brennstoffzelle 2 bzw. den Brennstoffzellen 2.

Jedoch ist es grundsätzlich auch möglich, die beiden Gehäuse 11, 18 fest miteinander zu verbinden und/oder als gemeinsames Gehäuse auszubilden.

Gemäß einer nicht dargestellten Ausführungsvariante können die verschiedenen Komponenten, wie das Sicherheitsventil 12, der Vordruckregler 15, der Druckschalter 14 und/oder der Drucksensor 17 auch innerhalb des Schutzgehäuses 18 angeordnet sein.

Grundsätzlich sind für die Steuerung bzw. Regelung des Zuführdrucks auch andere technische Lösungen möglich.

Einzelne Aspekte und Merkmale der verschiedenen Ausführungsformen können beliebig miteinander kombiniert oder bei sonstigen Brennstoffzellenanordnungen eingesetzt werden. Des weiteren können die verschiedenen Ausführungsformen auch beliebig miteinander kombiniert werden.

Insbesondere eignet sich die vorgeschlagene Brennstoffzellenanordnung 1 bzw. das vorgeschlagene Verfahren zum Betreiben einer Brennstoffzelle 2 zur Erzeugung von elektrischer Energie in einer mobilen Einrichtung oder einem Kraftfahrzeug (nicht dargestellt), das ein besonders sicherer Betrieb bei geringem Bau- und/oder Steuerungsaufwand möglich ist.

## Patentansprüche

1. Brennstoffzellenanordnung (1) mit mindestens einer Brennstoffzelle (2) und mit einer Versorgungseinrichtung (3) zur Versorgung der mindestens einen Brennstoffzelle (2) mit Brenngas, wobei die Versorgungseinrichtung (3) einen Druckminderer (4) aufweist, um einen gegenüber dem Zuführdruck erhöhten Versorgungsdruck des Brenngases auf den Zuführdruck abzusenken und wobei der Zuführdruck, mit dem das Brenngas der mindestens einen Brennstoffzelle (2) zugeführt wird, unter dem Umgebungsdruck liegt, **dadurch gekennzeichnet, dass** die Brennstoffzellenanordnung (1) eine Pumpe (7) zum brenngasseitigen Absaugen von Gas aus der mindestens einen Brennstoffzelle (2) aufweist, dass die Brennstoffzellenanordnung (1) ein der Pumpe (7) zugeordnetes Sperrventil (10) aufweist und dass das Sperrventil (10) stromauf der Pumpe (7) angeordnet ist.

2. Brennstoffzellenanordnung nach Anspruch 1, **dadurch gekennzeichnet, dass** der Druckminderer (4) als Relativregler ausgebildet ist.

3. Brennstoffzellenanordnung nach Anspruch 2, **dadurch gekennzeichnet, dass** die Druckdifferenz 100 bis 5000 Pa beträgt und/oder variierbar ist.

4. Brennstoffzellenanordnung nach einem der vorhergehenden Ansprüche, **dadurch gekennzeichnet, dass** der Druckminderer (4) ein vorzugsweise elektrisch gesteuertes Ventil (16) zur Druckminderung aufweist.

5. Brennstoffzellenanordnung nach einem der vorhergehenden Ansprüche, **dadurch gekennzeichnet, dass** der Druckminderer (4) bzw. dessen Ventil (16) in einem gasdichten und/oder druckfestem Schutzgehäuse (18) angeordnet ist.

6. Brennstoffzellenanordnung nach einem der vorhergehenden Ansprüche, **dadurch gekennzeichnet, dass** die Versorgungseinrichtung (3) einen Druckspeicher (6) oder Reformer zur Bereitstellung des Brenngases, insbesondere mit einem gegenüber dem Zuführdruck erhöhten Versorgungsdruck, aufweist.

7. Brennstoffzellenanordnung nach einem der vorhergehenden Ansprüche, **dadurch gekennzeichnet, dass** die Brennstoffzellenanordnung (1) eine der Pumpe (7) nachgeordnete Zündeinrichtung (9) aufweist, um abgesaugtes Gas verbrennen zu können.

8. Brennstoffzellenanordnung nach Anspruch 7, **dadurch gekennzeichnet, dass** die Zündeinrichtung (9) elektrisch betrieben oder beheizt ist.

9. Brennstoffzellenanordnung nach einem der vorhergehenden Ansprüche, **dadurch gekennzeichnet, dass** das Sperrventil (10) nur bei laufender Pumpe (7) öffnet.

10. Brennstoffzellenanordnung nach Anspruch 9, **dadurch gekennzeichnet, dass** das Sperrventil (10) selbsttätig und/oder nur bei pumpseitigem Unterdruck öffnet.

11. Brennstoffzellenanordnung (1) nach einem der vorhergehenden Ansprüche, **dadurch gekennzeichnet, dass** die Brennstoffzellenanordnung (1) ein gasdichtes Gehäuse und/oder Feuerschutzgehäuse (11) aufweist, in dem die mindestens eine Brennstoffzelle (2) angeordnet ist.

12. Brennstoffzellenanordnung nach Anspruch 11, **dadurch gekennzeichnet, dass** das Gehäuse (11) allseitig geschlossen ist und/oder die Brennstoffzelle (2) druckdicht bzw. gasdicht umschließt.

13. Brennstoffzellenanordnung nach Anspruch 11 oder 12, **dadurch gekennzeichnet, dass** der Zuführdruck, mit dem das Brenngas in das Gehäuse (11) geleitet wird, unter dem Umgebungsdruck liegt.

14. Brennstoffzellenanordnung nach einem der vorhergehenden Ansprüche, **dadurch gekennzeichnet, dass** die Versorgungseinrichtung (3) ein Sicherheitsventil (12) zum Sperren der Brenngaszufuhr und/oder zum Ablassen des Brenngases aus einer zu der mindestens einen Brennstoffzelle (2) führenden Zuleitung (5) aufweist.

## Claims

1. A fuel-cell arrangement (1) having at least one fuel cell (2) and having a supply device (3) for supplying the at least one fuel cell (2) with combustion gas, the supply device (3) having a pressure reducer (4), in order to reduce a supply pressure of the combustion gas, which is increased in relation to the feed pressure, to the feed pressure, and the feed pressure, at which the combustion gas is fed to the at least one fuel cell (2) being less than the ambient pressure, **characterized in that** the fuel-cell arrangement (1) has a pump (7) for suctioning gas on the combustion gas side out of the at least one fuel cell (2), the fuel-cell arrangement (1) has a shutoff valve (10) assigned to the pump (7), and the shutoff valve (10) is situated upstream from the pump (7).

2. The fuel-cell arrangement according to Claim 1, **characterized in that** the pressure reducer (4) is constucted as a relative regulator.

3. The fuel-cell arrangement according to Claim 2, **characterized in that** the pressure differential is 100 to 5000 Pa and/or is variable.

4. The fuel-cell arrangement according to one of the preceding claims, **characterized in that** the pressure reducer (4) has a preferably electrically controlled valve (16) for the pressure reduction.

5. The fuel-cell arrangement according to one of the preceding claims, **characterized in that** the pressure reducer (4) or the valve (16) thereof is situated in a gas-tight and/or pressure-resistant protective housing (18).

6. The fuel-cell arrangement according to one of the preceding claims, **characterized in that** the supply device (3) has a pressure accumulator (6) or reformer for providing the combustion gas, in particular at a supply pressure increased in relation to the feed pressure.

7. The fuel-cell arrangement according to one of the preceding claims, **characterized in that** the fuel-cell arrangement (1) has an ignition device (9) situated downstream from the pump (7), in order to be able to combust suctioned-off gas.

8. The fuel-cell arrangement according to Claim 7, **characterized in that** the ignition device (9) is electrically operated or heated.

9. The fuel-cell arrangement according to one of the preceding claims, **characterized in that** the shutoff valve (10) only opens when the pump (7) is running.

10. The fuel-cell arrangement according to Claim 9, **characterized in that** the shutoff valve (10) opens automatically and/or only in the event of pump-side partial vacuum.

11. The fuel-cell arrangement (1) according to one of the preceding claims, **characterized in that** the fuel-cell arrangement (1) has a gas-tight housing and/or fire protection housing (11), in which the at least one fuel cell (2) is situated.

12. The fuel-cell arrangement according to Claim 11, **characterized in that** the housing (11) is closed on all sides and/or encloses the fuel-cell (2) in a pressure-tight or gas-tight manner.

13. The fuel-cell arrangement according to Claim 11 or 12, **characterized in that** the feed pressure, at which the combustion gas is conducted into the housing (11), is less than the ambient pressure.

14. The fuel-cell arrangement according to one of the preceding claims, **characterized in that** the supply device (3) has a safety valve (12) for shutting off the combustion gas feed and/or for discharging the combustion gas from a feed line (5) leading to the at least one fuel cell (2).

## Revendications

1. Agencement de pile à combustible (1) comprenant au moins une pile à combustible (2) et comprenant un dispositif d'alimentation (3) pour alimenter l'au moins une pile à combustible (2) avec du gaz de combustion, sachant que le dispositif d'alimentation (3) présente un réducteur de pression (4) pour baisser, à la pression d'amenée, une pression d'alimentation du gaz de combustion élevée par rapport à la pression d'amenée, et sachant que la pression d'amenée à laquelle le gaz de combustion est amené à l'au moins une pile à combustible (2), est située en-dessous de la pression ambiante, **caractérisé en ce que** l'agencement de pile à combustible (1) présente une pompe (7) pour aspirer, côté gaz de combustion, du gaz de l'au moins une pile à combustible (2), que l'agencement de pile à combustible (1) présente une soupape d'arrêt (10) attribuée à la pompe et que la soupape d'arrêt (10) est disposée en amont de la pompe (7).

2. Agencement de pile à combustible selon la revendication 1, **caractérisé en ce que** le réducteur de pression (4) est formé en tant que régulateur relatif.

3. Agencement de pile à combustible selon la revendication 2, **caractérisé en ce que** la différence de pression est de 100 à 5000 Pa et/ou est variable.

4. Agencement de pile à combustible selon l'une des revendications précédentes, **caractérisé en ce que** le réducteur de pression (4) présente une soupape (16) commandée de préférence électriquement, pour réduire la pression.

5. Agencement de pile à combustible selon l'une des revendications précédentes, **caractérisé en ce que** le réducteur de pression (4), respectivement sa soupape (16), est disposé(e) dans un boitier de protection (18) étanche aux gaz et/ou résistant à la pression.

6. Agencement de pile à combustible selon l'une des revendications précédentes, **caractérisé en ce que** le dispositif d'alimentation (3) présente un accumulateur de pression (6) ou un reformeur pour préparer le gaz de combustion, en particulier à une pression d'alimentation élevée par rapport à la pression d'amenée.

7. Agencement de pile à combustible selon l'une des revendications précédentes, **caractérisé en ce que** l'agencement de pile à combustible (1) présente un dispositif d'allumage (9) en aval de la pompe (7), afin de pouvoir brûler le gaz aspiré.

8. Agencement de pile à combustible selon la revendication 7, **caractérisé en ce que** le dispositif d'allumage (9) est entraîné ou chauffé électriquement.

9. Agencement de pile à combustible selon l'une des revendications précédentes, **caractérisé en ce que** la soupape d'arrêt (10) ne s'ouvre que lorsque la pompe (7) fonctionne.

10. Agencement de pile à combustible selon la revendication 9, **caractérisé en ce que** la soupape d'arrêt (10) s'ouvre automatiquement et/ou uniquement lorsqu'il y a une dépression côté pompe.

11. Agencement de pile à combustible selon l'une des revendications précédentes, **caractérisé en ce que** l'agencement de pile à combustible (1) présente un boitier étanche aux gaz et/ou un boitier de protection contre l'incendie (11), dans lequel l'au moins une pile à combustible (2) est agencée.

12. Agencement de pile à combustible selon la revendication 11, **caractérisé en ce que** le boitier est fermé de tous côtés et/ou entoure la pile à combustible (2) de manière étanche à la pression respectivement aux gaz.

13. Agencement de pile à combustible selon la revendication 11 ou 12, **caractérisé en ce que** la pression d'amenée à laquelle le gaz de combustion est amené dans le boitier (11), est située en-dessous de la pression ambiante.

14. Agencement de pile à combustible selon l'une des revendications précédentes, **caractérisé en ce que** le dispositif d'alimentation (3) présente une soupape de sécurité (12) pour arrêter l'amenée de gaz de combustion et/ou pour évacuer le gaz de combustion d'une conduite d'amenée (5) conduisant à l'au moins une pile à combustible (2).
